# EUROPEAN PATENT SPECIFICATION

(11) **EP 0 201 330 B1**
(45) Date of publication and mention of the grant of the patent: **07.04.1993**
(21) Application number: 86303486.4
(22) Date of filing: 08.05.1986
(51) Int. Cl.: G11B 20/18

(54) **Apparatus for storing digital data words**
Gerät zur Speicherung digitaler Datenwörter
Appareil pour mettre en mémoire des mots de données digitales

(30) Priority: 08.05.1985 US 732353
(43) Date of publication of application: 12.11.1986
(73) Proprietor: THINKING MACHINES CORPORATION, Cambridge Massachusetts 02142 (US)
(72) Inventor: Hillis, Daniel W., Cambridge Massachusetts (US); Liu, Clement K., Brighton Massachusetts (US)
(74) Representative: Grünecker, Kinkeldey, Stockmair & Schwanhäusser Anwaltssozietät

(56) References cited:
- EP-A- 0 112 676
- EP-A- 0 117 287
- EP-A- 0 156 440
- DE-A- 3 119 669
- US-A- 3 876 978
- US-A- 4 092 732

## Description

### Description for the following Contracting States : AT, BE, CH, FR, IT, LI, LU, SE

This invention relates to storing digital data.

In a typical magnetic disk drive, several hard magnetic disks are mounted on a single rotating spindle. The storage space on each disk surface is organised in concentric tracks. The corresponding tracks on all of the disk surfaces form an imaginary cylinder. Each disk surface is served by a read/write head. All of the read/write heads can be moved together to any selected cylinder and can then store or retrieve data on the tracks that make up that cylinder.

Normally the magnetic disk drive is connected by a serial bus to a disk controller that, among other things, directs the read/write heads to move to the proper track, buffers data that is about to be stored on or has just been retrieved from the disk, ensures that the data is stored or retrieved at the proper address, and performs serial error correction and detection on the data. Typically the disk controller serves a parallel input/output bus connected to a computer whose input/output port is, for example, 32 bits wide. Thirty-two bit words delivered over the bus are passed via the disk controller and serially loaded onto or retrieved from the disk drive. The throughput rate of the serial bus between the disk controller and the disk drive is roughly matched to the throughput rate of the parallel I/O bus between the computer and the disk controller.

In order to expand the total available storage space, multiple disk drivers can be linked to a single controller in a daisy chain or star configuration.

US-PS-3417377 describes a shift and buffer circuitry in which different bit groups of a data word are stored on different tracks of a magnetic disk file or on different tracks of separate magnetic tapes. The reading of a byte from a track and the writing of a byte to a track proceed independently from the reading and writing operations to and from other tracks. Because of phase differences between the respective data transfers, the bytes of different tracks are transferred asynchronously to each other between the different storage media and a buffer unit. The data transmission of bytes between the buffer unit and a control unit is, however, carried out synchronously.

The article "Database Machines: An Idea Whose Time Has Passed? A Critique of the Future of Database Machines, Haran Boral, Computer Science Department, Technion - Israel Institute of Technology and David J. DeWitt, Computer Sciences Department, University of Wisconsin - Madison" gives an overview of trends in mass storage technology. Under item 3.1.2, the difficulty of the alignment of a plurality of read/write heads and the necessity of error correction logic in such systems is mentioned.

Bossen et al in US-PS-3876978 describes a system for preventing the catastrophic loss of data in one storage unit of a storage system comprised of a plurality of such storage units. Each bit of a data word is stored in a separate storage unit and an additional parity bit for each data word is stored in a parity storage unit. The content of this parity storage unit is updated each time any word stored in the storage unit is changed. Thus, in the event that one of the storage units fails, the content thereof can be recalculated based on the content of the unfailed storage units and the parity storage unit.

In US-PS-4092732, a storage subsystem, comprising a storage control unit and a number of failure independent storage devices, such as disk fail, is described. This storage subsystem comprises a check sum generator for generating a check sum segment from segments of a system record as the system record segments are being transferred between the storage subsystem and a CPU of a data processing system. The check sum segment and the associated system record segments are stored on different units so that, if one unit containing a system record segment becomes unavailable, the available segment is reconstructed during the transfer of the other available segments and the check sum segment to the CPU.

In view of this prior art, it is the object of the present invention to improve the reliability of such storage systems and also to simplify the organization of such systems.

This object is solved by the features of claim 1.

Preferred embodiments of the system include the following features: A data word is retrieved by delaying the delivery of any of the bits of the particular data word to the first parallel bus until all portions of the data word are ready to be delivered. Each storage unit sends a drain command when it is ready to deliver its bit and the storage units are drained only when all storage units have issued drain commands. Parallel error correction bits are generated for each data word and at least one of the error correction bits is stored on a storage unit that does not hold any bit of the related data word. The error correction bits are read at times corresponding to the reading of the data word and are used for correcting single bit errors in the data word. When storing data words, the different bits of the data word are not delvered to the different storage units until they are all ready to store. Each storage unit has a buffer and successive data words to be read out are requested at a rate sufficient to ensure that no buffer becomes full; and successive words to be written are delivered at a rate sufficient to ensure that no buffer becomes empty. Each individual line serving a storage unit conforms to the SCSI protocol. There are more than 32 bits (e.g. 256 bits) in each data word. The data words are delivered to the parallel bus at a rate of at least 4 megabits per second per line of the bus. Each storage unit is a magnetic disk drive.

We can provide a very high throughput rate storage system capable of serving a very wide, high-speed parallel I/O bus. Standard commercially available disk drives and controllers can be used without having to synchronise the rotations of the different disk drive spindles. By storing error correction bits and data bits independently, the system is tolerant to the failure of any one entire disk drive unit. Standard SCSI protocol commands are used to synchronise the overall operation of the system.

Other advantages and features of the systems will become apparent from the following description of preferred embodiments.

We first briefly describe the drawings.

Fig. 1 is a block diagram of a computer and related storage system.

Fig. 2 is a block diagram of one high-speed disk subsystem of Fig. 1.

Fig. 3 is a block diagram of a representative portion of the bus adaptor circuitry of Fig. 2.

Fig. 4A, 4B are timing diagrams of data store and data retrieve operations.

Fig. 5 is alternate circuitry to Fig. 3.

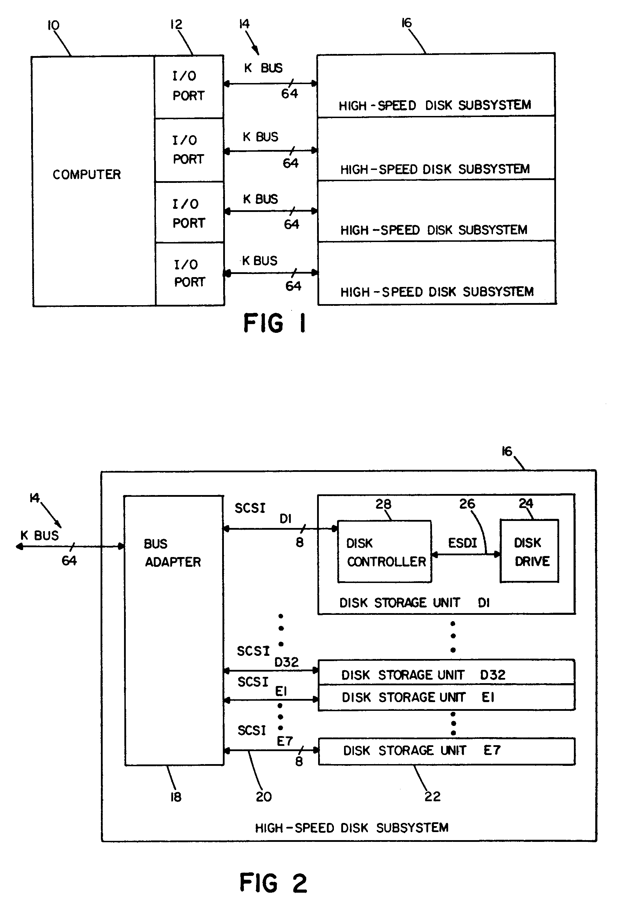

Referring to Fig. 1, a computer 10 ( of the kind described in our European Patent Application No. 84303598.1, the disclosure of which is to be regarded as incorporated herein by reference) has four identical input/output (I/O) ports 12. Each I/O port 12 is connected via a 64-bit wide parallel bus 13 (KBUS) to a corresponding high-speed disk subsystem 16 for storing data received over the KBUS, and for delivering retrieved data to the KBUS. Each KBUS has a throughput rate of 32 megabytes per second (8 bits per byte); data can be passed over all four KBUSes synchronously at an aggregate throughput rate of 128 megabytes per second.

Referring to Fig. 2, each disk subsystem 16 includes a bus adapter 18 connected to one of the KBUSes. The bus adapter 18 is also connected via 39 different parallel buses 20 (SCSI buses), each 8-bits wide, to 39 different disk storage units 22. Each disk storage unit 22 includes a disk drive 24 (e.g., Control Data Model 9415) connected via a serial bus 26 (ESDI bus) to a disk controller 28 (e.g., Champion model sold by Emulex) which is in turn connected to the SCSI bus that serves that disk storage unit. Each SCSI bus carries data and commands (in the form of command descriptor blocks--CDBs) in accordance with the Small Computer System Interface standard defined in U.S. Department of Commerce, National Bureau of Standards Publication X3T9 2/82-2, Revision 14B, November 6, 1984, the disclosure of which is to be regarded as incorporated by reference.

The 39 disk storage units and the 39 SCSI buses are organized into two groups. Thirty-two of the disk storage units and buses (denoted D1 through D32) are used to store and deliver data from computer 10. The remaining 7 disk storage units and buses (denoted E1 through E7) are used to store and deliver error correction bits that are derived from the data bits in a manner to be described below, and are used for error correcting. Except for this distinction in the type of information they carry, all 39 disk storage units and SCSI buses are identical.

Each ESDI bus carries data and commands serially in accordance with the Enhanced Small Device Interface defined for example in Magnetic Peripherals, Inc. publication 77738076-D, 1984, the disclosure of which is to be regarded as incorporated by reference.

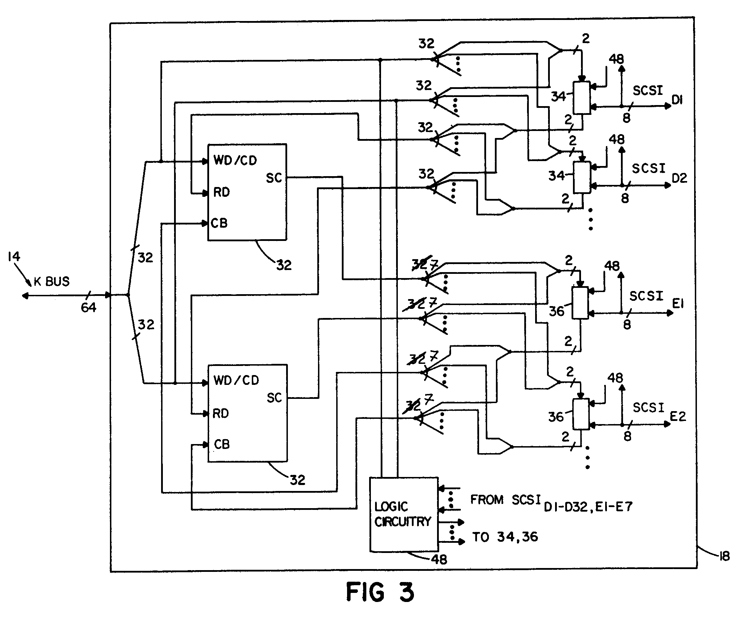

Referring to Fig. 3, in each bus adaptor 18, the 64 lines of the KBus are split into two sets of 32 lines each, the two sets being connected respectively to the bidirectional WD/CD inputs (write data or corrected data) of two error detection and correction units 32 (each unit comprising, for example, a pair of Intel 8206 or AMD 2960 chips). The 32 lines connected to each WC/CD input are also connected respectively to the inputs of 32 eight-bit shift registers 34. Each shift register thus has its two-bit input connected to one line from each of the two sets of 32 lines, and each shift register is arranged to shift two bits at a time.

For each set of 32 data bits applied to the WD/CD input of each unit 32, the unit generates seven parallel error correction bits that provide information sufficient to correct any single bit error in any of the related 32 data bits that occur during subsequent retrieval of those bits.

The seven error correction bits of each unit 32 are delivered from the SC output via seven error correction bit lines that are connected respectively to the inputs of seven eight-bit shift registers 36 that are like registers 34.

After one transfer cycle of the KBUS has elapsed, each shift register 34 contains 2 data bits corresponding to the data bits appearing on two of the lines of the KBUS, and each shift register 36 contains two of the corresponding error correction bits. After four transfer cycles of the KBUS have elapsed, each shift register 34 contains 8 data bits (one data byte) and each shift register 36 contains 8 error correction bits (one error correction byte). At that time the bytes in the shift registers 34, 36 are unloaded respectively onto SCSI buses D₁-D₃₂ and E₁-E₇. Then the process is repeated for the next four transfer cycles of the KBUS, and so on. The loading and unloading of the shift registers 34, 36 are timed so that data that appears at 32 megabytes per second on the KBUS (4 megabits per line) is delivered to 32 of the 8-bit wide SCSI buses at a rate of 1.5 megabytes per second per SCSI bus. Conversely data that appears at 1.5 megabytes per second per SCSI bus is delivered to the KBUS at 32 megabytes per second.

When data is retrieved from the disk drives 24, in each byte transfer cycle of the SCSI buses, one eight-bit byte is loaded in parallel into each shift register 34, 36. Next, all of the shift registers 34 together unload the first and second bits of their error correction bytes in parallel to the RD (read data) inputs of EDC units 32, and all of the shift registers 36 unload the first and second bits of their data bytes in parallel to the CB (check bit) inputs of EDC units 32. EDC units 32 uses the error correction bits received via their CB inputs to check and correct any single bit error appearing in the data bits received at their RD inputs. EDC units 32 then deliver the 64 corrected data bits at their WD/CD outputs to the KBUS. The process is repeated until all eight bits of the bytes held in shift registers 34, 36 are unloaded. Then the shift registers are reloaded with new bytes from the SCSI buses.

Each disk controller 28 (Fig. 2) is arranged to control the storage and retrieval of data on disk drive 24 as follows.

To initiate a storage operation, computer 28 sends an appropriate command descriptor block (CDB) over the KBUS indicating that a specified number of bytes (word count) are to be stored beginning at a specified disk address. The CDB is passed by bus adaptor 18 via the SCSI bus to disk controller 28. The controller will then, if necessary, send a seek command over the ESDI bus to the disk drive to cause it to move the read/write heads to the cylinder containing the storage location whose address was specified in the CDB. The controller 28 will next request that the data to be stored be delivered over the SCSI bus. The request is passed back to the computer via the KBUS. The data is then passed over the KBUS via the bus adaptor to the SCSI bus (as previously described) and as the data bits are received they are stored in a 14 kilobyte buffer in the controller. Since each track has a capacity of about 10 kilobytes, the buffer is able to hold more than a full track worth of data at one time. The disk controller 28 will begin to unload its buffer serially onto the ESDI bus either when the buffer is full (if the word count is greater than or equal to the buffer capacity), or otherwise as soon as the number of bytes in the buffer equals the word count. The data is then stored beginning at the specified address on the track. If the word count is greater than the capacity of the buffer, then as soon as the buffer has been drained to a level where only 8 kbytes of data remain in the buffer, the controller sends a request for additional data back to computer 10 and the additional data is loaded into the buffer at the same time that the oldest data in the controller is being unloaded to disk drive 24. The process continues until the word count has been reached.

Similarly, to initiate a retrieval operation, computer 28 sends a CDB indicating that a specified number of bytes are to be retrieved beginning at a specified disk address. The controller will first, if necessary, cause the disk drive read/write heads to seek to the proper track, and to read data beginning at the designated address. The data passes serially over the ESDI bus and is loaded into the controller's serial buffer. As soon as the buffer contains a number of bytes equal to the number of bytes in a sector of the track, the controller will send a request over the SCSI bus to computer 10 to take the data from the buffer. While that data is being unloaded, the controller continues to accept data over the ESDI bus from the disk drive and to load it into its buffer. The process continues until the number of bytes equals the word count.

The storage and retrieval of data via all of the SCSI buses to the controllers occurs synchronously in parallel. That is, from the point of view of the bus adaptor, related data is passed in a single operation over all of the SCSI buses at the same time. Since the different disk drives 24 are typically rotating out of phase with one another, it is unlikely that the corresponding track locations on different disk drives will appear under their respective read/write heads at the same time. Accordingly there will be differences in the times when different controllers are able to execute storage commands, and differences in the times when different controllers will be ready to deliver retrieved data. The potentially out-of-phase operation of the different controllers is reconciled with the need for synchronous transfers to and from the bus adaptor in the following way.

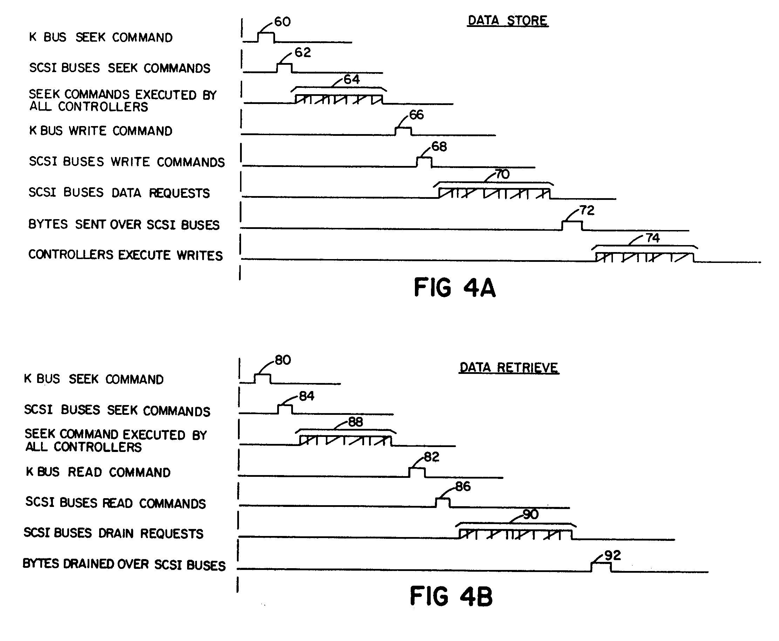

Referring to Fig. 4A, when data is to be stored, computer 10 first sends to the bus adaptor a seek command (60) naming a particular cylinder. The bus adaptor then broadcasts the seek command by passing appropriate CDBs via the SCSI buses to all of the controllers (62) to cause them all to seek to the same cylinders. While the controllers are independently executing the seek commands, the computer can perform other unrelated operations.

After passage of a period of time (64) which is sufficient to ensure that all controllers have executed the seek command, computer 10 sends a write command (including the associated disk address and word count such that a cylinder boundary is not crossed) to the bus adaptor (66). The bus adaptor broadcasts the write command to all controllers (68) by passing appropriate CDBs via the SCSI buses to all of the controllers. The controllers will then all initiate a series of requests (70) over the SCSI buses on a byte-by-byte basis to the bus adaptor for the data that is to be stored. The data requests from different controllers typically will not appear synchronously. The bus adaptor includes logic circuitry 48 that is connected to all of the SCSI buses and will detect the requests as they appear. Logic circuitry 48 also has control outputs connected to control inputs of the respective shift registers 34, 36 to control the loading and unloading of the shift registers via the SCSI buses.

When all of the controllers have issued their requests, the bus adaptor will satisfy all requests simultaneously by sending unload signals from logic circuitry 48 to all shift registers 34, 36 to cause them to unload their bytes over all of the SCSI buses at the same time (72). Each controller will continue to request data byte-by-byte until its buffer is full (or until the number of bytes in its buffer equals the word count). Each controller will then begin to write the data from its buffer onto the disk (74).

The different controllers will execute the write operations at asynchronous times which depend on the phase differences between the shaft locations of their respective disk drives. In the case when the word count exceeds the buffer capacity, as soon as the number of bytes remaining in its buffer falls below 8 kilobytes, each controller will request more data from the bus adaptor. These controller requests for more data typically will arrive asynchronously at the bus adaptor. The bus adaptor through its logic circuitry 48 will wait until all requests have been received before honoring them by delivering more bytes. In effect, the bus adaptor waits until the buffer in the controller which is the cast to request more data, is drained to the 8 kilobyte level. Meanwhile, the buffer in the controller which was the first to request more data has been emptied below the 8 kilobyte level. Thereafter the bus adaptor will be delivering data bytes as soon as the first-to-request controller asks for them, thus ensuring that the buffer in the first-to-request controller is never fully emptied. The process continues until the number of data bytes delivered to each controller reaches the word count.

Referring to Fig. 4B, when data is to be retrieved, computer 10 sends a seek command (80) followed by a read command (82) both of which are broadcast by the bus adaptor to the controllers (84, 86) in a similar manner as for the data storage operation. Each controller will execute the seek command (88) and will begin to execute the read command by causing the disk drive to read bytes from the disk and to deliver them serially over the ESDI bus to be loaded in the controller buffer. The different controllers will typically execute the reading of data asynchronously. When a sector's worth of read data has been entered into the buffer, the controller will ask to have the buffer drained (90), but will continue the data reading and buffer filling. When the bus adaptor logic circuitry detects that all controllers are waiting to have their buffers drained, it begins draining them (92). Thereafter the bus adaptor will keep draining bytes from the controller buffers at the rate requested by the controller which was the first to request draining, thus ensuring that the first buffer is never full. The read operation continues until the number of bytes read from each disk drive equals the word count.

Should any one of the disk storage units 22 in each high-speed disk subsystem fail, the EDC unit will be able to correct erroneous bits received from the failed unit. The entire failed unit can then be replaced by a working unit without interrupting the operation of the disk subsystem.

We thus provide a very high throughput rate storage system capable of serving a very wide, high-speed parallel I/O bus. Standard commercially available disk drives and controllers can be used without having to synchronize the rotations of the different disk drive spindles. The system is tolerant to the failure of one entire disk drive unit. Standard SCSI protocol commands are used to synchronize the overall operation of the system.

Other embodiments are feasible.

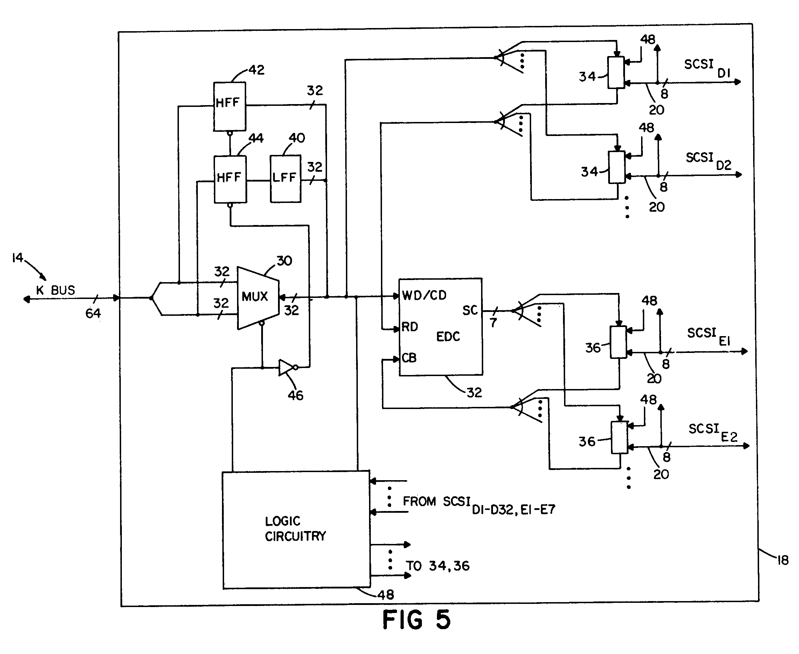

For example, referring to Fig. 5, the bus adaptor 18 could use a single EDC unit 32. In that case, the 64 lines of the KBUS are split into two sets of 32 lines each, both sets of which are connected to a multiplexer 30. When data is to be stored, multiplexer 30, during a single transfer cycle of the KBUS, first connects one set of 32 lines of the KBUS to the bidirectional WD/CD input of unit 32 and then connects the other set of 32 KBUS lines to the WD/CD input. The 32 lines connected to the WC/CD input are also connected respectively to the inputs of 32 eight-bit shift registers 34. During data retrieval, unit 32 delivers the 32 corrected data bits at the WD/CD output to a bank of 32 flip-flops (LFF) 40. Next the shift registers 34, 36 unload the second bits of their bytes to EDC unit 32, which in turn delivers the 32 corrected bits to a bank of flip-flops (HFF) 42. At the same time the bank of flip-flops 40 shifts its 32 bits to a third bank of 32 flip-flops (HFF) 44. Then a KBUS transaction will deliver all 64 bits to the computer. Inverter 46 ensures that, when the computer is driving the KBUS, multiplexer 30 is active but banks 42, 44 are inactive, and otherwise multiplexer 30 is inactive and banks 42, 44 are able to deliver bits to the KBUS.

The input to inverter 46 is provided from logic circuitry 48 based on monitoring of the data bits passing back and forth to and from EDC unit 32. Circuitry 48 determines when it is appropriate to trigger the flip flop banks based on the appearances of the successive sets of 32 bits.

The number of KBUS lines served by each disk storage unit could be more or less than two.

### Description for the following Contracting States : DE, GB, NL

This invention relates to storing digital data.

In a typical magnetic disk drive, several hard magnetic disks are mounted on a single rotating spindle. The storage space on each disk surface is organised in concentric tracks. The corresponding tracks on all of the disk surfaces form an imaginary cylinder. Each disk surface is served by a read/write head. All of the read/write heads can be moved together to any selected cylinder and can then store or retrieve data on the tracks that make up that cylinder.

Normally the magnetic disk drive is connected by a serial bus to a disk controller that, among other things, directs the read/write heads to move to the proper track, buffers data that is about to be stored on or has just been retrieved from the disk, ensures that the data is stored or retrieved at the proper address, and performs serial error correction and detection on the data. Typically the disk controller serves a parallel input/output bus connected to a computer whose input/output port is, for example, 32 bits wide. Thirty-two bit words delivered over the bus are passed via the disk controller and serially loaded onto or retrieved from the disk drive. The throughput rate of the serial bus between the disk controller and the disk drive is roughly matched to the throughput rate of the parallel I/O bus between the computer and the disk controller.

In order to expand the total available storage space, multiple disk drivers can be linked to a single controller in a daisy chain or star configuration.

US-PS-3417377 describes a shift and buffer circuitry in which different bit groups of a data word are stored on different tracks of a magnetic disk file or on different tracks of separate magnetic tapes. The reading of a byte from a track and the writing of a byte to a track proceed independently from the reading and writing operations to and from other tracks. Because of phase differences between the respective data transfers, the bytes of different tracks are transferred asynchronously to each other between the different storage media and a buffer unit. The data transmission of bytes between the buffer unit and a control unit is, however, carried out synchronously.

The article "Database Machines: An Idea Whose Time Has Passed? A Critique of the Future of Database Machines, Haran Boral, Computer Science Department, Technion - Israel Institute of Technology and David J. DeWitt, Computer Sciences Department, University of Wisconsin - Madison" gives an overview of trends in mass storage technology. Under item 3.1.2, the difficulty of the alignment of a plurality of read/write heads and the necessity of error correction logic in such systems is mentioned.

Bossen et al in US-PS-3876978 describes a system for preventing the catastrophic loss of data in one storage unit of a storage system comprised of a plurality of such storage units. Each bit of a data word is stored in a separate storage unit and an additional parity bit for each data word is stored in a parity storage unit. The content of this parity storage unit is updated each time any word stored in the storage unit is changed. Thus, in the event that one of the storage units fails, the content thereof can be recalculated based on the content of the unfailed storage units and the parity storage unit.

In US-PS-4092732, a storage subsystem, comprising a storage control unit and a number of failure independent storage devices, such as disk files, is described. This storage subsystem comprises a check sum generator for generating a check sum segment from segments of a system record as the system record segments are being transferred between the storage subsystem and a CPU of a data processing system. The check sum segment and the associated system record segments are stored on different units so that, if one unit containing a system record segment becomes unavailable, the available segment is reconstructed during the transfer of the other available segments and the check sum segment to the CPU.

EP-A-0156724 of CII Honeywell Bull, though not published at the application date for the present application, claims a priority date which is earlier than the priority date claimed for the present application. The said European patent application discloses an apparatus for storing digital data words, each data word having a plurality of bits and for delivering the bits from storage when requested by a data processor. The CII Honeywell Bull apparatus comprises a plurality of storage units each having a mechanically-driven disk and a head for reading the disk. The respective disks are driven independently. Different bits of a data word are stored in different storage units. The CII Honeywell Bull arrangement delivers the bits of a particular data word from the respective storage units simultaneously in parallel to a parallel data bus and hence to the host processor.

In view of this prior art, it is the object of the present invention to improve the reliability of such storage systems and also to simplify the organization of such systems.

This object is solved by the features of claim 1.

It will be seen that in the apparatus according to the present invention a temporary storage means is utilised, the adaptor being arranged for operative response to a request from the data processor by causing the storage units to read the bits of each data word from the storage units and to deliver them simultaneously in parallel to the temporary storage on the first parallel data bus and thereafter to the data processor on the parallel second data bus. Such temporary storage avoids the possibility that the host processor may be interrupted.

Preferred embodiments of the system include the following features: A data word is retrieved by delaying the delivery of any of the bits of the particular data word to the first parallel bus until all portions of the data word are ready to be delivered. Each storage unit sends a drain command when it is ready to deliver its bit and the storage units are drained only when all storage units have issued drain commands. Parallel error correction bits are generated for each data word and at least one of the error correction bits is stored on a storage unit that does not hold any bit of the related data word. The error correction bits are read at times corresponding to the reading of the data word and are used for correcting single bit errors in the data word. When storing data words, the different bits of the data word are not delvered to the different storage units until they are all ready to store. Each storage unit has a buffer and successive data words to be read out are requested at a rate sufficient to ensure that no buffer becomes full; and successive words to be written are delivered at a rate sufficient to ensure that no buffer becomes empty. Each individual line serving a storage unit conforms to the SCSI protocol. There are more than 32 bits (e.g. 256 bits) in each data word. The data words are delivered to the parallel bus at a rate of at least 4 megabits per second per line of the bus. Each storage unit is a magnetic disk drive.

We can provide a very high throughput rate storage system capable of serving a very wide, high-speed parallel I/O bus. Standard commercially available disk drives and controllers can be used without having to synchronise the rotations of the different disk drive spindles. By storing error correction bits and data bits independently, the system is tolerant to the failure of any one entire disk drive unit. Standard SCSI protocol commands are used to synchronise the overall operation of the system.

Other advantages and features of the systems will become apparent from the following description of preferred embodiments.

We first briefly describe the drawings.

Fig. 1 is a block diagram of a computer and related storage system.

Fig. 2 is a block diagram of one high-speed disk subsystem of Fig. 1.

Fig. 3 is a block diagram of a representative portion of the bus adaptor circuitry of Fig. 2.

Fig. 4A, 4B are timing diagrams of data store and data retrieve operations.

Fig. 5 is alternate circuitry to Fig. 3.

Referring to Fig. 1, a computer 10 ( of the kind described in our European Patent Application No. 84303598.1, the disclosure of which is to be regarded as incorporated herein by reference) has four identical input/output (I/O) ports 12. Each I/O port 12 is connected via a 64-bit wide parallel bus 13 (KBUS) to a corresponding high-speed disk subsystem 16 for storing data received over the KBUS, and for delivering retrieved data to the KBUS. Each KBUS has a throughput rate of 32 megabytes per second (8 bits per byte); data can be passed over all four KBUSes synchronously at an aggregate throughput rate of 128 megabytes per second.

Referring to Fig. 2, each disk subsystem 16 includes a bus adapter 18 connected to one of the KBUSes. The bus adaptor 18 is also connected via 39 different parallel buses 20 (SCSI buses), each 8-bits wide, to 39 different disk storage units 22. Each disk storage unit 22 includes a disk drive 24 (e.g., Control Data Model 9415) connected via a serial bus 26 (ESDI bus) to a disk controller 28 (e.g., Champion model sold by Emulex) which is in turn connected to the SCSI bus that serves that disk storage unit. Each SCSI bus carries data and commands (in the form of command descriptor blocks--CDBs) in accordance with the Small Computer System Interface standard defined in U.S. Department of Commerce, National Bureau of Standards Publication X3T9 2/82-2, Revision 14B, November 6, 1984, the disclosure of which is to be regarded as incorporated by reference.

The 39 disk storage units and the 39 SCSI buses are organized into two groups. Thirty-two of the disk storage units and buses (denoted D1 through D32) are used to store and deliver data from computer 10. The remaining 7 disk storage units and buses (denoted E1 through E7) are used to store and deliver error correction bits that are derived from the data bits in a manner to be described below, and are used for error correcting. Except for this distinction in the type of information they carry, all 39 disk storage units and SCSI buses are identical.

Each ESDI bus carries data and commands serially in accordance with the Enhanced Small Device Interface defined for example in Magnetic Peripherals, Inc. publication 77738076-D, 1984, the disclosure of which is to be regarded as incorporated by reference.

Referring to Fig. 3, in each bus adaptor 18, the 64 lines of the KBus are split into two sets of 32 lines each, the two sets being connected respectively to the bidirectional WD/CD inputs (write data or corrected data) of two error detection and correction units 32 (each unit comprising, for example, a pair of Intel 8206 or AMD 2960 chips). The 32 lines connected to each WC/CD input are also connected respectively to the inputs of 32 eight-bit shift registers 34. Each shift register thus has its two-bit input connected to one line from each of the two sets of 32 lines, and each shift register is arranged to shift two bits at a time.

For each set of 32 data bits applied to the WD/CD input of each unit 32, the unit generates seven parallel error correction bits that provide information sufficient to correct any single bit error in any of the related 32 data bits that occur during subsequent retrieval of those bits.

The seven error correction bits of each unit 32 are delivered from the SC output via seven error correction bit lines that are connected respectively to the inputs of seven eight-bit shift registers 36 that are like registers 34.

After one transfer cycle of the KBUS has elapsed, each shift register 34 contains 2 data bits corresponding to the data bits appearing on two of the lines of the KBUS, and each shift register 36 contains two of the corresponding error correction bits. After four transfer cycles of the KBUS have elapsed, each shift register 34 contains 8 data bits (one data byte) and each shift register 36 contains 8 error correction bits (one error correction byte). At that time the bytes in the shift registers 34, 36 are unloaded respectively onto SCSI buses D₁-D₃₂ and E₁-E₇. Then the process is repeated for the next four transfer cycles of the KBUS, and so on. The loading and unloading of the shift registers 34, 36 are timed so that data that appears at 32 megabytes per second on the KBUS (4 megabits per line) is delivered to 32 of the 8-bit wide SCSI buses at a rate of 1.5 megabytes per second per SCSI bus. Conversely data that appears at 1.5 megabytes per second per SCSI bus is delivered to the KBUS at 32 megabytes per second.

When data is retrieved from the disk drives 24, in each byte transfer cycle of the SCSI buses, one eight-bit byte is loaded in parallel into each shift register 34, 36. Next, all of the shift registers 34 together unload the first and second bits of their error correction bytes in parallel to the RD (read data) inputs of EDC units 32, and all of the shift registers 36 unload the first and second bits of their data bytes in parallel to the CB (check bit) inputs of EDC units 32. EDC units 32 uses the error correction bits received via their CB inputs to check and correct any single bit error appearing in the data bits received at their RD inputs. EDC units 32 then deliver the 64 corrected data bits at their WD/CD outputs to the KBUS. The process is repeated until all eight bits of the bytes held in shift registers 34, 36 are unloaded. Then the shift registers are reloaded with new bytes from the SCSI buses.

Each disk controller 28 (Fig. 2) is arranged to control the storage and retrieval of data on disk drive 24 as follows.

To initiate a storage operation, computer 28 sends an appropriate command descriptor block (CDB) over the KBUS indicating that a specified number of bytes (word count) are to be stored beginning at a specified disk address. The CDB is passed by bus adaptor 18 via the SCSI bus to disk controller 28. The controller will then, if necessary, send a seek command over the ESDI bus to the disk drive to cause it to move the read/write heads to the cylinder containing the storage location whose address was specified in the CDB. The controller 28 will next request that the data to be stored be delivered over the SCSI bus. The request is passed back to the computer via the KBUS. The data is then passed over the KBUS via the bus adaptor to the SCSI bus (as previously described) and as the data bits are received they are stored in a 14 kilobyte buffer in the controller. Since each track has a capacity of about 10 kilobytes, the buffer is able to hold more than a full track worth of data at one time. The disk controller 28 will begin to unload its buffer serially onto the ESDI bus either when the buffer is full (if the word count is greater than or equal to the buffer capacity), or otherwise as soon as the number of bytes in the buffer equals the word count. The data is then stored beginning at the specified address on the track. If the word count is greater than the capacity of the buffer, then as soon as the buffer has been drained to a level where only 8 kbytes of data remain in the buffer, the controller sends a request for additional data back to computer 10 and the additional data is loaded into the buffer at the same time that the oldest data in the controller is being unloaded to disk drive 24. The process continues until the word count has been reached.

Similarly, to initiate a retrieval operation, computer 28 sends a CDB indicating that a specified number of bytes are to be retrieved beginning at a specified disk address. The controller will first, if necessary, cause the disk drive read/write heads to seek to the proper track, and to read data beginning at the designated address. The data passes serially over the ESDI bus and is loaded into the controller's serial buffer. As soon as the buffer contains a number of bytes equal to the number of bytes in a sector of the track, the controller will send a request over the SCSI bus to computer 10 to take the data from the buffer. While that data is being unloaded, the controller continues to accept data over the ESDI bus from the disk drive and to load it into its buffer. The process continues until the number of bytes equals the word count.

The storage and retrieval of data via all of the SCSI buses to the controllers occurs synchronously in parallel. That is, from the point of view of the bus adaptor, related data is passed in a single operation over all of the SCSI buses at the same time. Since the different disk drives 24 are typically rotating out of phase with one another, it is unlikely that the corresponding track locations on different disk drives will appear under their respective read/write heads at the same time. Accordingly there will be differences in the times when different controllers are able to execute storage commands, and differences in the times when different controllers will be ready to deliver retrieved data. The potentially out-of-phase operation of the different controllers is reconciled with the need for synchronous transfers to and from the bus adaptor in the following way.

Referring to Fig. 4A, when data is to be stored, computer 10 first sends to the bus adaptor a seek command (60) naming a particular cylinder. The bus adaptor then broadcasts the seek command by passing appropriate CDBs via the SCSI buses to all of the controllers (62) to cause them all to seek to the same cylinders. While the controllers are independently executing the seek commands, the computer can perform other unrelated operations.

After passage of a period of time (64) which is sufficient to ensure that all controllers have executed the seek command, computer 10 sends a write command (including the associated disk address and word count such that a cylinder boundary is not crossed) to the bus adaptor (66). The bus adaptor broadcasts the write command to all controllers (68) by passing appropriate CDBs via the SCSI buses to all of the controllers. The controllers will then all initiate a series of requests (70) over the SCSI buses on a byte-by-byte basis to the bus adaptor for the data that is to be stored. The data requests from different controllers typically will not appear synchronously. The bus adaptor includes logic circuitry 48 that is connected to all of the SCSI buses and will detect the requests as they appear. Logic circuitry 48 also has control outputs connected to control inputs of the respective shift registers 34, 36 to control the loading and unloading of the shift registers via the SCSI buses.

When all of the controllers have issued their requests, the bus adaptor will satisfy all requests simultaneously by sending unload signals from logic circuitry 48 to all shift registers 34, 36 to cause them to unload their bytes over all of the SCSI buses at the same time (72). Each controller will continue to request data byte-by-byte until its buffer is full (or until the number of bytes in its buffer equals the word count). Each controller will then begin to write the data from its buffer onto the disk (74).

The different controllers will execute the write operations at asynchronous times which depend on the phase differences between the shaft locations of their respective disk drives. In the case when the word count exceeds the buffer capacity, as soon as the number of bytes remaining in its buffer falls below 8 kilobytes, each controller will request more data from the bus adaptor. These controller requests for more data typically will arrive asynchronously at the bus adaptor. The bus adaptor through its logic circuitry 48 will wait until all requests have been received before honoring them by delivering more bytes. In effect, the bus adaptor waits until the buffer in the controller which is the last to request more data, is drained to the 8 kilobyte level. Meanwhile, the buffer in the controller which was the first to request more data has been emptied below the 8 kilobyte level. Thereafter the bus adaptor will be delivering data bytes as soon as the first-to-request controller asks for them, thus ensuring that the buffer in the first-to-request controller is never fully emptied. The process continues until the number of data bytes delivered to each controller reaches the word count.

Referring to Fig. 4B, when data is to be retrieved, computer 10 sends a seek command (80) followed by a read command (82) both of which are broadcast by the bus adaptor to the controllers (84, 86) in a similar manner as for the data storage operation. Each controller will execute the seek command (88) and will begin to execute the read command by causing the disk drive to read bytes from the disk and to deliver them serially over the ESDI bus to be loaded in the controller buffer. The different controllers will typically execute the reading of data asynchronously. When a sector's worth of read data has been entered into the buffer, the controller will ask to have the buffer drained (90), but will continue the data reading and buffer filling. When the bus adaptor logic circuitry detects that all controllers are waiting to have their buffers drained, it begins draining them (92). Thereafter the bus adaptor will keep draining bytes from the controller buffers at the rate requested by the controller which was the first to request draining, thus ensuring that the first buffer is never full. The read operation continues until the number of bytes read from each disk drive equals the word count.

Should any one of the disk storage units 22 in each high-speed disk subsystem fail, the EDC unit will be able to correct erroneous bits received from the failed unit. The entire failed unit can then be replaced by a working unit without interrupting the operation of the disk subsystem.

We thus provide a very high throughput rate storage system capable of serving a very wide, high-speed parallel I/O bus. Standard commercially available disk drives and controllers can be used without having to synchronize the rotations of the different disk drive spindles. The system is tolerant to the failure of one entire disk drive unit. Standard SCSI protocol commands are used to synchronize the overall operation of the system.

Other embodiments are feasible.

For example, referring to Fig. 5, the bus adaptor 18 could use a single EDC unit 32. In that case, the 64 lines of the KBUS are split into two sets of 32 lines each, both sets of which are connected to a multiplexer 30. When data is to be stored, multiplexer 30, during a single transfer cycle of the KBUS, first connects one set of 32 lines of the KBUS to the bidirectional WD/CD input of unit 32 and then connects the other set of 32 KBUS lines to the WD/CD input. The 32 lines connected to the WC/CD input are also connected respectively to the inputs of 32 eight-bit shift registers 34. During data retrieval, unit 32 delivers the 32 corrected data bits at the WD/CD output to a bank of 32 flip-flops (LFF) 40. Next the shift registers 34, 36 unload the second bits of their bytes to EDC unit 32, which in turn delivers the 32 corrected bits to a bank of flip-flops (HFF) 42. At the same time the bank of flip-flops 40 shifts its 32 bits to a third bank of 32 flip-flops (HFF) 44. Then a KBUS transaction will deliver all 64 bits to the computer. Inverter 46 ensures that, when the computer is driving the KBUS, multiplexer 30 is active but banks 42, 44 are inactive, and otherwise multiplexer 30 is inactive and banks 42, 44 are able to deliver bits to the KBUS.

The input to inverter 46 is provided from logic circuitry 48 based on monitoring of the data bits passing back and forth to and from EDC unit 32. Circuitry 48 determines when it is appropriate to trigger the flip flop banks based on the appearances of the successive sets of 32 bits.

The number of KBUS lines served by each disk storage unit could be more or less than two.

## Claims (Claims for the following Contracting State(s): AT, BE, CH, FR, IT, LI, LU, SE)

1. Apparatus for storing digital data words, each said data word having a plurality of bits and for delivery of the bits of each data word from storage when requested by a data processor (10), said apparatus comprising:
storage units (24) each of which has a mechanically-driven medium and a head for reading data from and writing data to said medium, whereby different bit-groups of each data word are stored in different ones of said storage units and each of said different bit-groups is written to and read from the respective medium asynchronous with respect to the other groups of bits;
buffer means (28) for temporarily storing the bit-groups of each data word before storing them in the storage units and after reading them from the storage units; and
first and second bus means (14,20) for synchronous transmission of the bits of each data word between said buffer means and said processor (10),
**characterized in that**
the media of different said storage units are driven independently from each other,
an error correction means (32) is arranged between said first and second bus means (14,20) for generating at least one error correction bit for each data word before said data word is transmitted to said buffer means for storing, said error correction bit being stored by a storage unit different from said storage units used for storing said data word and being read together with the respective data word during a reading operation,
and in that said error correction means (32) detects and corrects at least a single bit error in a data word read from the storage units by using said error correction bit.

2. Apparatus according to claim 1 wherein a plurality of temporary storage means (34,36) is provided, each associated with a said storage unit (24) for accumulating bits from a plurality of data words received from said first bus means (14) to form a word for transmission over said second bus means (20) when data is being stored in said storage units and for receiving a data word from said second bus means when data is being retrieved from said storage units to form a plurality of data words for transmission over said first bus means.

3. Apparatus according to claims 1 or 2 wherein each bit-group consists of a single bit.

4. Apparatus according to at least one of the preceding claims wherein said error correction means (32) generates several correction bits for each data word, different groups of said correction bits being stored in different storage units.

5. Apparatus according to claim 4 wherein each of said correction bit groups consists of a single correction bit.

6. Apparatus according to at least one of the preceding claims wherein said buffer means (28) includes a buffer circuit (28) for each storage unit (22) and each said buffer circuit is operatively arranged to send a drain command to a logic circuit (48) when the bit-groups of a particular data word stored in said buffer circuit is ready to be delivered and said logic circuit (48) is arranged to monitor the appearances of said drain commands from all said buffer circuits and, when said drain commands from all said buffer circuits have appeared, to drain all of said bit-groups of said particular data word from said buffer circuits and to deliver them simultaneously to said second bus means.

7. Apparatus according to at least one of the preceding claims wherein each said storage unit comprises a magnetic disc drive.

## Claims (Claims for the following Contracting State(s): DE, GB, NL)

1. Apparatus for storing digital data words, each said data word having a plurality of bits and for delivery of the bits of each data word from storage when requested by a data processor (10), said apparatus comprising:
storage units (24) each of which has a mechanically-driven medium and a head for reading data from and writing data to said medium, whereby different bit-groups of each data word are stored in different ones of said storage units and each of said different bit-groups is written to and read from the respective medium asynchronous with respect to the other groups of bits;
buffer means (28) for temporarily storing the bit-groups of each data word before storing them in the storage units and after reading them from the storage units; and
first and second bus means (14,20) for synchronous transmission of the bits of each data word between said buffer means and said processor (10),
**characterized in that**
the media of different said storage units are driven independently from each other,
a plurality of temporary storage means (34,36) is provided, each associated with a said storage unit (24) for accumulating bits from a plurality of data words received from said first bus means (14) to form a word for transmission over said second bus means (20) when data is being stored in said storage units,
an error correction means (32) is arranged between said first and second bus means (14,20) for generating at least one error correction bit for each data word before said data word is transmitted to said buffer means for storing, said error correction bit being stored by a storage unit different from said storage units used for storing said data word and being read together with the respective data word during a reading operation,
and in that said error correction means (32) detects and corrects at least a single bit error in a data word read from the storage units by using said error correction bit.

2. Apparatus according to claim 1 wherein said temporary storage means (34,36) receive a data word from said second bus means when data is being retrieved from said storage units to form a plurality of data words for transmission over said first bus means.

3. Apparatus according to claims 1 or 2 wherein each bit-group consists of a single bit.

4. Apparatus according to at least one of the preceding claims wherein said error correction means (32) generates several correction bits for each data word, different groups of said correction bits being stored in different storage units.

5. Apparatus according to claim 4 wherein each of said correction bit groups consists of a single correction bit.

6. Apparatus according to at least one of the preceding claims wherein said buffer means (28) includes a buffer circuit (28) for each storage unit (22) and each said buffer circuit is operatively arranged to send a drain command to a logic circuit (48) when the bit-groups of a particular data word stored in said buffer circuit is ready to be delivered and said logic circuit (48) is arranged to monitor the appearances of said drain commands from all said buffer circuits and, when said drain commands from all said buffer circuits have appeared, to drain all of said bit-groups of said particular data word from said buffer circuits and to deliver them simultaneously to said second bus means.

7. Apparatus according to at least one of the preceding claims wherein each said storage unit comprises a magnetic disc drive.

## Patentansprüche (Patentansprüche für folgende(n) Vertragsstaat(en): AT, BE, CH, FR, IT, LI, LU, SE)

1. Vorrichtung zum Speichern digitaler Datenwörter, wobei jedes Datenwort eine Vielzahl von Bits aufweist und zum Abgeben der Bits jedes Datenworts vom Speicher, wenn dieses von einem Daten-Prozessor (10) angefordert wird, wobei die Vorrichtung umfaßt:
Speichereinheiten (24), von denen jede ein mechanisch betriebenes Medium und einen Kopf zum Lesen der Daten von und zum Schreiben von Daten auf das Medium aufweist, wobei unterschiedliche Bit-Gruppen eines jeden Datenworts in unterschiedlichen Speichereinheiten gespeichert sind und wobei jede der unterschiedlichen Bit-Gruppen asynchron bezüglich der anderen Bit-Gruppen in das entsprechende Medium geschrieben bzw. von diesem gelesen wird,
Puffereinrichtungen (28) zum vorübergehenden Speichern der Bit-Gruppen eines jeden Datenworts, bevor sie in den Speichereinheiten gespeichert werden und nachdem sie von den Speichereinrichtungen gelesen wurden, und
eine erste und zweite Buseinrichtung (14, 20) zum synchronen Übertragen der Bits eines jeden Datenwortes zwischen der Puffereinrichtung und dem Prozessor (10), dadurch gekennzeichnet, daß
die Medien unterschiedlicher Speichereinheiten unabhängig voneinander angetrieben werden,
eine Fehlerkorrektureinrichtung (32) zwischen der ersten und zweiten Buseinrichtung (14, 20) vorgesehen ist zum Erzeugen von zumindest einem Fehlerkorrekturbit für jedes Datenwort, bevor das Datenwort an die Puffereinrichtung zum Abspeichern übertragen wird, wobei das Fehlerkorrekturbit durch eine Speichereinheit gespeichert wird, die sich von den Speichereinrichtungen unterscheidet, welche zum Speichern des Datenwortes verwendet werden und wobei dieses Fehlerkorrekturbit zusammen mit dem entsprechenden Datenwort während einer Leseoperation gelesen wird,
und daß die Fehlerkorrektureinrichtung (32) zumindest einen einzelnen Bitfehler in dem Datenwort, welches von den Speichereinrichtungen gelesen wurde unter Verwendung des Fehlerkorrekturbits erkennt und korrigiert wird.

2. Vorrichtung nach Anspruch 1, bei der eine Vielzahl von vorübergehenden Speichereinrichtungen (34, 36) vorgesehen ist, von denen jede mit einer Speichereinheit (24) assoziiert ist, zum Akkumulieren der Bits von einer Vielzahl von Datenwörtern, wie sie von der ersten Buseinrichtung (14) empfangen werden, um ein Wort für die Übertragung über die zweite Buseinrichtung (20) zu bilden, wenn Daten in die Speichereinrichtungen gespeichert werden, und zum Empfangen eines Datenwortes von der zweiten Buseinrichtung, wenn Daten von den Speichereinheiten abgerufen werden, um eine Vielzahl von Datenwörtern für die Übertragung über die erste Buseinrichtung zu bilden.

3. Vorrichtung nach Anspruch 1 oder 2, wobei jede Bitgruppe aus einem einzelnen Bit besteht.

4. Vorrichtung nach mindestens einem der vorhergehenden Ansprüche, bei dem die Fehlerkorrektureinrichtung (32) mehrere Korrekturbits für jedes Datenwort erzeugt, wobei unterschiedliche Gruppen der Korrekturbits in unterschiedlichen Speichereinheiten gespeichert werden.

5. Vorrichtung nach Anspruch 4, wobei jede der Korrekturbit-Gruppen aus einem einzelnen Korrekturbit besteht.

6. Vorrichtung nach zumindest einem der vorhergehenden Ansprüche, wobei die Puffereinrichtung (28) einen Pufferschaltkreis (28) für jede Speichereinheit (22) umfaßt und jeder Pufferschaltkreis so ausgelegt ist, daß er einen Ausgabe-Befehl an einen logischen Schaltkreis (48) sendet, wenn die Bit-Gruppen eines besonderen Datenwortes, welches in dem Pufferschaltkreis gespeichert ist, fertig zum Abrufen sind und wobei der logische Schaltkreis (48) so ausgelegt ist, daß er das Vorliegen der Ausgabe-Befehle von allen Pufferschaltkreisen überwacht und für den Fall, daß die Ausgabe-Befehle von allen Pufferschaltkreisen aufgetreten sind, alle Bit-Gruppen des besonderen Datenwortes von den Pufferschaltkreisen ausgibt, um sie gleichzeitig an die zweite Buseinrichtung abzugeben.

7. Vorrichtung nach mindestens einem der vorhergehenden Ansprüche, wobei jede Speichereinheit ein magnetisches Disk-Laufwerk aufweist.

## Patentansprüche (Patentansprüche für folgende(n) Vertragsstaat(en): DE, GB, NL)

1. Vorrichtung zum Speichern digitaler Datenwörter, wobei jedes Datenwort eine Vielzahl von Bits aufweist und zum Abgeben der Bits jedes Datenworts vom Speicher, wenn dieses von einem Daten-Prozessor (10) angefordert wird, wobei die Vorrichtung umfaßt:
Speichereinheiten (24), von denen jede ein mechanisch betriebenes Medium und einen Kopf zum Lesen der Daten von und zum Schreiben von Daten auf das Medium aufweist, wobei unterschiedliche Bit-Gruppen eines jeden Datenworts in unterschiedlichen Speichereinheiten gespeichert sind und wobei jede der unterschiedlichen Bit-Gruppen asynchron bezüglich der anderen Bit-Gruppen in das entsprechende Medium geschrieben bzw. von diesem gelesen wird,
Puffereinrichtungen (28) zum vorübergehenden Speichern der Bit-Gruppen eines jeden Datenworts, bevor sie in den Speichereinheiten gespeichert werden und nachdem sie von den Speichereinrichtungen gelesen wurden, und
eine erste und zweite Buseinrichtung (14, 20) zum synchronen Übertragen der Bits eines jeden Datenwortes zwischen der Puffereinrichtung und dem Prozessor (10), dadurch gekennzeichnet, daß
die Medien unterschiedlicher Speichereinheiten unabhängig voneinander angetrieben werden,
eine Vielzahl von vorübergehenden Speichereinrichtungen (34, 36) vorgesehen ist, von denen jede mit einer Speichereinheit (24) assoziiert ist, zum Akkumulieren der Bits von einer Vielzahl von Datenwörtern, wie sie von der ersten Buseinrichtung (14) empfangen werden, um ein Wort für die Übertragung über die zweite Buseinrichtung (20) zu bilden, wenn Daten in die Speichereinrichtungen gespeichert werden,
eine Fehlerkorrektureinrichtung (32) zwischen der ersten und zweiten Buseinrichtung (14, 20) vorgesehen ist zum Erzeugen von zumindest einem Fehlerkorrekturbit für jedes Datenwort, bevor das Datenwort an die Puffereinrichtung zum Abspeichern übertragen wird, wobei das Fehlerkorrekturbit durch eine Speichereinheit gespeichert wird, die sich von den Speichereinrichtungen unterscheidet, welche zum Speichern des Datenwortes verwendet werden und wobei dieses Fehlerkorrekturbit zusammen mit dem entsprechenden Datenwort während einer Leseoperation gelesen wird,
und daß die Fehlerkorrektureinrichtung (32) zumindest einen einzelnen Bitfehler in dem Datenwort, welches von den Speichereinrichtungen gelesen wurde unter Verwendung des Fehlerkorrekturbits erkennt und korrigiert.

2. Vorrichtung nach Anspruch 1, bei der die vorübergehenden Speichereinrichtungen (34, 36) ein Datenwort von der zweiten Buseinrichtung empfangen, wenn Daten von den Speichereinheiten abgerufen werden, um eine Vielzahl von Datenwörtern für die Übertragung über die erste Buseinrichtung zu bilden.

3. Vorrichtung nach Anspruch 1 oder 2, wobei jede Bitgruppe aus einem einzelnen Bit besteht.

4. Vorrichtung nach mindestens einem der vorhergehenden Ansprüche, bei dem die Fehlerkorrektureinrichtung (32) mehrere Korrekturbits für jedes Datenwort erzeugt, wobei unterschiedliche Gruppen der Korrekturbits in unterschiedlichen Speichereinheiten gespeichert werden.

5. Vorrichtung nach Anspruch 4, wobei jede der Korrekturbit-Gruppen aus einem einzelnen Korrekturbit besteht.

6. Vorrichtung nach zumindest einem der vorhergehenden Ansprüche, wobei die Puffereinrichtung (28) einen Pufferschaltkreis (28) für jede Speichereinheit (22) umfaßt und jeder Pufferschaltkreis so ausgelegt ist, daß er einen Ausgabe-Befehl an einen logischen Schaltkreis (48) sendet, wenn die Bit-Gruppen eines besonderen Datenwortes, welches in dem Pufferschaltkreis gespeichert ist, fertig zum Abrufen sind und wobei der logische Schaltkreis (48) so ausgelegt ist, daß er das Vorliegen der Ausgabe-Befehle von allen Pufferschaltkreisen überwacht und für den Fall, daß die Ausgabe-Befehle von allen Pufferschaltkreisen aufgetreten sind, alle Bit-Gruppen des besonderen Datenwortes von den Pufferschaltkreisen ausgibt, um sie gleichzeitig an die zweite Buseinrichtung abzugeben.

7. Vorrichtung nach mindestens einem der vorhergehenden Ansprüche, wobei jede Speichereinheit ein magnetisches Disk-Laufwerk aufweist.

## Revendications (Revendications pour l'(les) Etat(s) contractant(s) suivant(s): AT, BE, CH, FR, IT, LI, LU, SE)

1. Dispositif pour mémoriser des mots d'information numérique, chacun desdits mots d'information ayant une pluralité de bits, et pour délivrer les bits de chaque mot d'information à partir de la mémoire lorsque la demande en est faite par un processeur de données (10), ledit dispositif comprenant :
des unités de mémoire (24), dont chacune comporte un support entraîné mécaniquement et une tête pour lire des informations à partir dudit support, ou y écrire des informations, ce par quoi des groupes de bits différents de chaque mot d'information sont mémorisés dans des unités différentes desdites unités de mémoire, et chacun desdits groupes de bits différents est écrit sur le support respectif, et lu à partir de celui-ci, de manière asynchrone par rapport aux autres groupes de bits ;
un moyen de mémoire tampon (28) pour mémoriser temporairement les groupes de bits de chaque mot d'information avant de les mettre en mémoire dans les unités de mémoire et après les avoir lus à partir des unités de mémoire ; et
des premier et second moyens de bus (14, 20) pour une transmission synchrone des bits de chaque mot d'information entre ledit moyen de mémoire tampon et ledit processeur (10),
caractérisé en ce que :
les supports desdites unités de mémoire différentes sont entraînés indépendamment les uns des autres,
un moyen de correction d'erreurs (32) est disposé entre lesdits premier et second moyens de bus (14, 20) pour produire au moins un bit de correction d'erreur pour chaque mot d'information avant que ledit mot d'information ne soit transmis audit moyen de mémoire tampon pour mémorisation, ledit bit de correction d'erreur étant mémorisé par une unité de mémoire différente desdites unités de mémoire utilisées pour mémoriser ledit mot d'information et étant lu en même temps que le mot d'information correspondant pendant une opération de lecture,
et en ce que ledit moyen de correction d'erreurs (32) détecte et corrige au moins une erreur d'un seul bit dans un mot d'information lu à partir des unités de mémoire, en utilisant ledit bit de correction d'erreur.

2. Dispositif selon la revendication 1, dans lequel une pluralité de moyens de mémoire intermédiaire (34, 36) est prévue, chacun associé avec l'une desdites unité de mémoire (24) pour accumuler des bits, issus d'une pluralité de mots d'information reçus dudit premier moyen de bus (14) pour former un mot pour transmission par ledit second moyen de bus (20) lorsque des données sont en cours de mémorisation dans lesdites unités de mémorisation et pour recevoir dudit second moyen de bus un mot d'information lorsque des données sont en cours d'extraction desdites unités de mémoire pour former une pluralité de mots d'information pour transmission par ledit premier moyen de bus.

3. Dispositif selon les revendications 1 ou 2, dans lequel chaque groupe de bits consiste en un seul bit.

4. Dispositif selon au moins l'une des revendications précédentes, dans lequel ledit moyen de correction d'erreurs (32) produit plusieurs bits de correction pour chaque mot d'information, des groupes différents desdits bits de correction étant mémorisés dans des unités de mémoire différentes.

5. Dispositif selon la revendication 4, dans lequel chacun desdits groupes de bits de correction consiste en un seul bit de correction.

6. Dispositif selon au moins l'une quelconque des revendications précédentes, dans lequel ledit moyen de mémoire tampon (28) comprend un circuit tampon (28) pour chaque unité de mémoire (22) et chaque circuit tampon est aménagé pour envoyer une instruction de vidage à un circuit logique (48) lorsque les groupes de bits d'un mot d'information particulier mémorisé dans ledit circuit tampon est prêt à être fourni, et dans lequel ledit circuit logique (48) est aménagé pour surveiller l'apparition desdites instructions de vidage venant de tous lesdits circuits tampons et, lorsque lesdites instructions de vidage venant de tous lesdits circuits tampons sont présentes, pour extraire tous lesdits groupes de bits dudit mot d'information particulier desdits circuits tampons et pour les fournir simultanément audit second moyen de bus.

7. Dispositif selon au moins l'une quelconque des revendications précédentes, dans lequel chaque unité de mémoire comprend une mémoire à disque magnétique.

## Revendications (Revendications pour l'(les) Etat(s) contractant(s) suivant(s): DE, GB, NL)

1. Dispositif pour mémoriser des mots d'information numérique, chacun desdits mots d'information ayant une pluralité de bits, et pour délivrer les bits de chaque mot d'information à partir de la mémoire lorsque la demande en est faite par un processeur de données (10), ledit dispositif comprenant :
des unités de mémoire (24), dont chacune comporte un support entraîné mécaniquement et une tête pour lire des informations à partir dudit support, ou y écrire des informations, ce par quoi des groupes de bits différents de chaque mot d'information sont mémorisés dans des unités différentes desdites unités de mémoire, et chacun desdits groupes de bits différents est écrit sur le support respectif, et lu à partir de celui-ci, de manière asynchrone par rapport aux autres groupes de bits ;
un moyen de mémoire tampon (28) pour mémoriser temporairement les groupes de bits de chaque mot d'information avant de les mettre en mémoire dans les unités de mémoire et après les avoir lus à partir des unités de mémoire ; et
des premier et second moyens de bus (14, 20) pour une transmission synchrone des bits de chaque mot d'information entre ledit moyen de mémoire tampon et ledit processeur (10),
caractérisé en ce que :
les supports desdites unités de mémoire différentes sont entraînés indépendamment les uns des autres,
une pluralité de moyens de mémoire intermédiaires (34, 36) est prévue, chacun étant associé à l'une desdites unités de mémoire (24) pour accumuler des bits venant d'une pluralité de mots d'information reçus à partir dudit premier moyen de bus (14) pour former un mot, pour transmission par ledit second moyen de bus (20), lorsque l'information est mise en mémoire dans lesdites unités de mémoire,
un moyen de correction d'erreurs (32) est disposé entre lesdits premier et second moyens de bus (14, 20) pour produire au moins un bit de correction d'erreur pour chaque mot d'information avant que ledit mot d'information ne soit transmis audit moyen de mémoire tampon pour mémorisation, ledit bit de correction d'erreur étant mémorisé par une unité de mémoire différente desdites unités de mémoire utilisées pour mémoriser ledit mot d'information et étant lu en même temps que le mot d'information correspondant pendant une opération de lecture,
et en ce que ledit moyen de correction d'erreurs (32) détecte et corrige au moins une erreur d'un seul bit dans un mot d'information lu à partir des unités de mémoire, en utilisant ledit bit de correction d'erreur.

2. Dispositif selon la revendication 1, dans lequel lesdits moyens de mémoire intermédiaire (34, 36) reçoivent dudit second moyen de bus un mot d'information lorsque des données sont en cours d'extraction desdites unités de mémoire pour former une pluralité de mots d'information pour transmission par ledit premier moyen de bus.

3. Dispositif selon les revendications 1 ou 2, dans lequel chaque groupe de bits consiste en un seul bit.

4. Dispositif selon au moins l'une des revendications précédentes, dans lequel ledit moyen de correction d'erreurs (32) produit plusieurs bits de correction pour chaque mot d'information, des groupes différents desdits bits de correction étant mémorisés dans des unités de mémoire différentes.

5. Dispositif selon la revendication 4, dans lequel chacun desdits groupes de bits de correction consiste en un seul bit de correction.

6. Dispositif selon au moins l'une quelconque des revendications précédentes, dans lequel ledit moyen de mémoire tampon (28) comprend un circuit tampon (28) pour chaque unité de mémoire (22) et chaque circuit tampon est aménagé pour envoyer une instruction de vidage à un circuit logique (48) lorsque les groupes de bits d'un mot d'information particulier mémorisé dans ledit circuit tampon est prêt à être fourni, et dans lequel ledit circuit logique (48) est aménagé pour surveiller l'apparition desdites instructions de vidage venant de tous lesdits circuits tampons et, lorsque lesdites instructions de vidage venant de tous lesdits circuits tampons sont présentes, pour extraire tous lesdits groupes de bits dudit mot d'information particulier desdits circuits tampons et pour les fournir simultanément audit second moyen de bus.

7. Dispositif selon au moins l'une quelconque des revendications précédentes, dans lequel chaque unité de mémoire comprend une mémoire à disque magnétique.
